# EUROPEAN PATENT APPLICATION

(11) **EP 1 464 922 A1**
(43) Date of publication of application: **06.10.2004**
(21) Application number: 04251595.7
(22) Date of filing: 19.03.2004
(51) Int. Cl.: G01C 21/34, G08G 1/0969

(54) **Map information processing device for delivering update display data**

(30) Priority: 04.04.2003 JP 2003101672
(71) Applicant: Pioneer Corporation, Tokyo 153-8654 (JP); Increment P Corporation, Tokyo 153-8665 (JP)
(72) Inventor: Amano, Kouji, Meguro-ku Tokyo 153-8665 (JP); Takenaga, Takashi, Meguro-ku Tokyo 153-8665 (JP)
(74) Representative: Haley, Stephen

(57) **Abstract**

When searching for a route, a version information of a map information stored in a memory of terminal unit (300) is sent to a server unit (400). The server unit (400) searches for a travel route according to a map information stored in a storage thereof. The server unit (400) compares its version information with the version information in the terminal unit (300), and sends the map information when the version information are different. Since the server unit (400) previously updated a display data that can be easily created, the server unit (400) sends a travel route together with at least the display data so that the terminal unit (300) displays roads reflecting most current information. When recognizing that a matching data is updated by comparing the version information at a later date, the matching data is also updated.

## Description

The present invention relates to a map information processing device for processing a map information having a display data and a matching data, a system thereof, a method thereof, a program thereof and a recording medium storing the program.

A communication navigation system conventionally known is that acquires a map information stored in a sever unit via communication by using mobile communication terminals such as an in-vehicle or portable navigation device, a PDA (Personal Digital Assistant), a mobile phone, a PHS (Personal Handyphone System), and a portable personal computer so as to retrieve an information on a current position and a route to a destination, and to retrieve an information on shops nearby. In such communication navigation system, since the management of the map information with a large amount of data is centralized at the server unit, the mobile communication terminal need not to have a storage for storing the map information, thereby simplifying the structure, reducing in the size and the weight and readily providing the latest map information. For the purpose of smooth operation and management of the data, the map information is constituted by a plurality of digitalized map files that are divided into a plurality of areas.

When the map is displayed on a display, a display data including an element data for an element consisting a map is generally used. In other words, the display data dedicates to smoothly display the map. In a navigation system for example, when a current position of a vehicle is overlaid onto a displayed map, a map matching processing is performed in order to display the current position in a manner such that the vehicle travels on a road of the map. It is known that the map matching processing is also performed, with the use of a matching data where a road is represented by a point information and a segment information connecting the point information, in order to correct the current position on the basis of the matching data and the current position of the vehicle separately measured and overlay the corrected current position onto the map displayed by the display data.

However, the conventional navigation system has disadvantages. For example, due to the wide spread thereof, the growing access increases the load of the server unit. Furthermore, when a server unit operator is in charge of management of accessory information such as an information on restaurants being provided by accessory information providers, the maintenance of the accessory information is inefficient. There are various known arts for efficiently operating the communication navigation system (See Prior Art 1: JP 2002-257554-A paragraphs No. 0036 to 0045, Prior Art 2: JP2002-297026-A paragraphs No.0017 to 0028).

In Prior Art 1, a plurality of server units for respectively storing a map information of their assigned areas are arranged at certain intervals, and the stored information is constantly delivered to predetermined areas without specifying receivers. When a user of a navigation system travels to an arbitrary area and acquires a map information therefrom, the map information is acquired from a server unit of the area where the user is located. With this arrangement, since accesses are dispersed to each of the server units, the load of each server unit is reduced.

In Prior Art 2, a server unit operated by an operator stores a base map layer group for graphically representing a basic geographical information including roads and rail roads and an accessory information layer group. In the accessory information layer group, for example, each accessory information layer has an accessory information provider authorized to rent the layer. The accessory information provider can update the rented accessory information of the accessory information layer at any time. With this arrangement, since the server unit operator needs not manage the accessory information, the maintenance of the accessory information is efficiently performed.

By the way, in Prior Art 1, the map information is updated according to a command from a control center. In Prior Art 2, the map information is updated by the operator. However, as the update of the map information requires creation of a display data and creation of a matching data, which takes considerable time, it is difficult to frequently update the map information. Therefore, users can not acquire a map information reflecting the most current information.

An object of the present invention is to provide a map information processing device for easily acquiring an appropriate map information, a system thereof, a method thereof, a program thereof and a recording medium storing the program.

A map information processing device according to a first aspect of the present invention is for delivering a map information over a network, in which the map information has: a display data including an element data for an element constituting a map of a predetermined area; and a matching data corresponding to the display data, including a plurality of point information that have coordinates information and unique point information and represent predetermined points, and a segment information that has a unique segment information and connects a pair of point information, the matching data representing a road by the point information and the segment information, the map information processing device including: a storage storing the map information and capable of storing an update-display data having an element data for a road other than the road represented by the matching data; and a delivery section capable of delivering the map information and the update-display data and capable of delivering a signal indicating that there is no corresponding matching data when delivering the update-display data.

A map information processing device according to a second aspect of the present invention is for delivering a map information over a network, in which the map information has: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a display version information associated with the display data on revision status of the display data, the map information processing device including: a storage for storing the map information; a version information recognizer for reading and recognizing the display version information stored in the storage; and a delivery section for delivering the display data corresponding to the recognized display version information as an update-display data when it is determined that the display version information recognized by the version information recognizer is different from the display version information recognized previously.

A map information processing device according to a third aspect of the present invention is for acquiring a map information over a network, wherein the map information is stored in a storage and is provided with: a display data including an element data for an element constituting a map of a predetermined area; and a matching data corresponding to the display data, including a plurality of point information that have coordinates information and unique point information and represent predetermined points, and a segment information that has a unique segment information and connects a pair of point information, the matching data representing a road by the point information and the segment information, the map information processing device including: a map information acquiring section for acquiring the display data and the matching data from the storage; and a determining section for determining whether the display data acquired by the map information acquiring section is an update-display data having an element data for a road other than the road represented by the matching data and generates a signal indicating that there is no corresponding matching data when determining that the display data is the update-display data.

A map information processing device according to still a fourth aspect of the present invention is for acquiring a map information over a network, in which the map information is stored in a storage and is provided with: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a display version information associated with the display data on revision status of the display data, the map information processing device including: a version information recognizer for reading and recognizing the display version information stored in the storage over the network; and a map information acquiring section for reading the display data corresponding to the recognized display version information as an update-display data from the storage over the network when it is determined that the display version information recognized by the version information recognizer is different from the display version information recognized previously.

A map information processing system according to a fifth aspect of the present invention, includes: the map information processing device according to the first or the second aspect of the present invention; and a terminal unit being connected to the map information processing device over the network in a manner capable of acquiring the map information.

A map information processing system according to a sixth aspect of the present invention includes: the map information processing device according to the second aspect of the present invention; and a terminal unit being connected to the map information processing device over the network in a manner capable of acquiring the map information, the terminal unit including a terminal storage storing the acquired map information, in the map information processing device, the version information recognizer recognizes a display version information of the map information stored in the storage of the terminal unit, the delivery section delivers the display data corresponding to the display version information stored in the storage to the terminal unit when the recognized display version information is different from the recognized display version information read from the storage.

A map information processing system according to a seventh aspect of the present invention includes: the map information processing device according to the third or the fourth aspect of the present invention; and a server unit to which the map information processing device is connected over the network in a manner capable of acquiring the map information, the server unit including a storage for storing the map information.

A map information processing method according to a eights aspect of the present invention is for delivering a map information by a computing section over a network, in which the map information has: a display data including an element data for an element constituting a map of a predetermined area; and a matching data corresponding to the display data, including a plurality of point information that have coordinates information and unique point information and represent predetermined points, and segment information that have unique segment information and connect a pair of point information, the matching data representing a road by the point information and the segment information, and in which the computing section delivers a signal indicating that there is no corresponding matching data when delivering an update-display information having an element data for a road other than the road represented by the matching data.

A map information processing method according to a ninth aspect of the present invention is for delivering a map information by a computing section over a network, in which the map information is stored in a storage and is provided with: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a version information associated with the display data on revision status of the display data, and in which the computing section reads and recognizes the version information and delivers the display data corresponding to the version information as an updated data from the storage when the recognized version information is different from the previous version information.

A map information processing method according to a tenth aspect of the present invention is for delivering a map information by a computing section over a network, in which the map information is stored in a storage and is provided with: a display data including an element data for an element constituting a map of a predetermined area; and a matching data corresponding to the display data, including a plurality of point information that have coordinates information and unique point information and represent predetermined points, and a segment information that has a unique segment information and connects a pair of point information, the matching data representing a road by the point information and the segment information, and in which the computing section determines whether the acquired display data is an update-display data having an element data for a road other than the road represented by the matching data and generates a signal indicating that there is no corresponding matching data when determining that the display data is the update-display data.

A map information processing method according to a eleventh aspect of the present invention is for delivering a map information by a computing section over a network, in which the map information is stored in a storage and is provided with: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a display version information associated with the display data on revision status of the display data, and in which the computing section acquires the display data corresponding to the version information as an updated data from the storage when the display version information previously acquired is different from the display version information stored in the storage.

A map information processing program according to a twelfth aspect of the present invention executes the map information processing methods according to any one of the aspects of the present invention by a computing section.

A recording medium according to a thirteenth aspect of the present invention stores the map information processing program in a manner readable by a computing section.

In the drawings:
Fig. 1 is a block diagram schematically showing structure of a navigation system according to an embodiment of the present invention;
Fig. 2 is a block diagram schematically showing structure of a terminal unit according to the embodiment;
Fig. 3 is a block diagram schematically showing structure of a server unit according to the embodiment;
Fig. 4 is a conceptual diagram schematically showing table structure of a display data of a map information according to the embodiment;
Fig. 5 is a conceptual diagram schematically showing table structure of a matching data of the map information according to the embodiment;
Fig. 6 is an illustration showing table structure of a linked-line block information according to the embodiment;
Fig. 7 is an illustration showing relation between nodes and links in the matching data according to the embodiment;
Fig. 8 is an illustration showing table structure of a point information according to the embodiment;
Fig. 9 is an illustration showing table structure of a version information according to the embodiment;
Fig. 10 is a flowchart showing operation for acquiring the map information when the power is turned on according to the embodiment;
Figs. 11 A, 11B and 11C are illustrations each showing a status of acquiring the map information according to the embodiment;

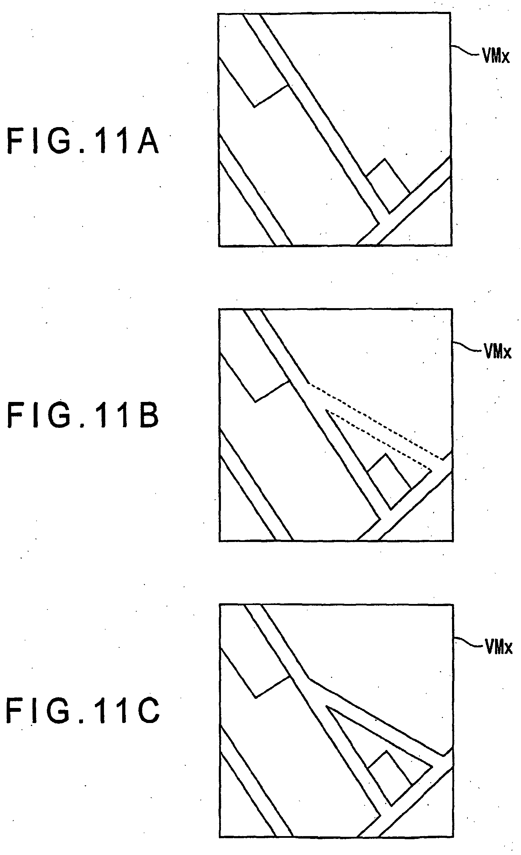

Fig. 11A: a screen before update
Fig. 11B: a screen after updating only a display data
Fig. 11C: a screen after updating the map information

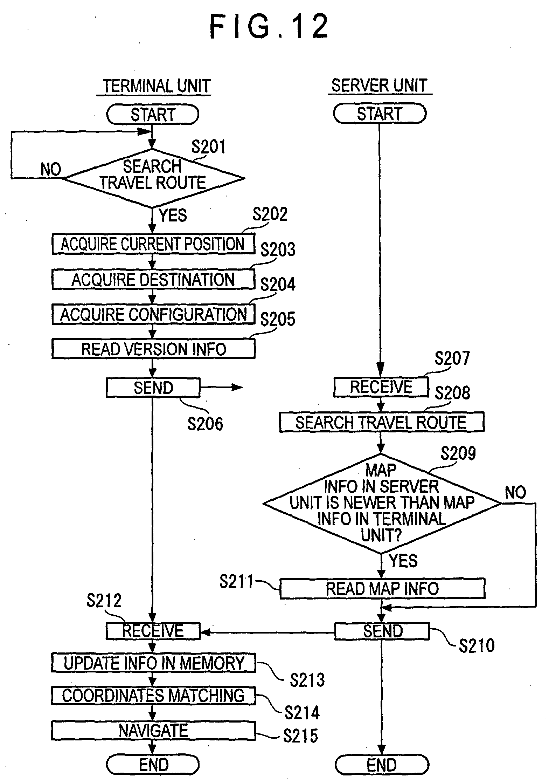

Fig. 12 is a flowchart showing operation for acquiring the map information when searching for a route according to the embodiment;

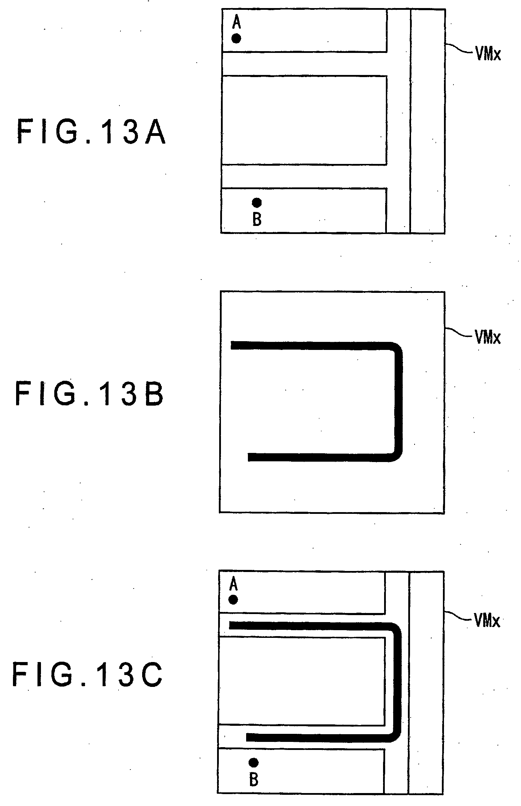

Figs. 13A, 13B and 13C are illustrations each showing a status of acquiring the map information according to the embodiment;
Fig. 13A: a screen before update
Fig. 13B: a screen after updating only a display data
Fig. 13C: a screen after updating the map information

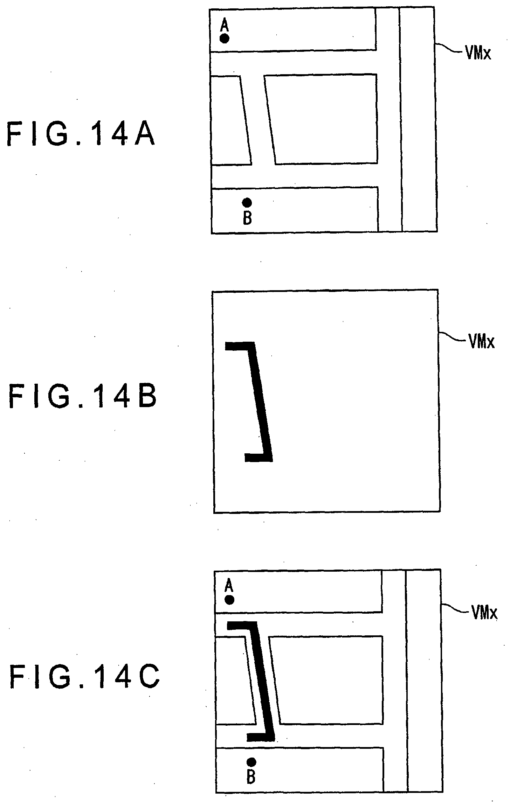

Figs. 14A, 14B and 14C are illustrations each showing a status of acquiring the map information according to the embodiment; and
Fig. 14A: a screen before update
Fig. 14B: a screen after updating only a display data
Fig. 14C: a screen after updating the map information

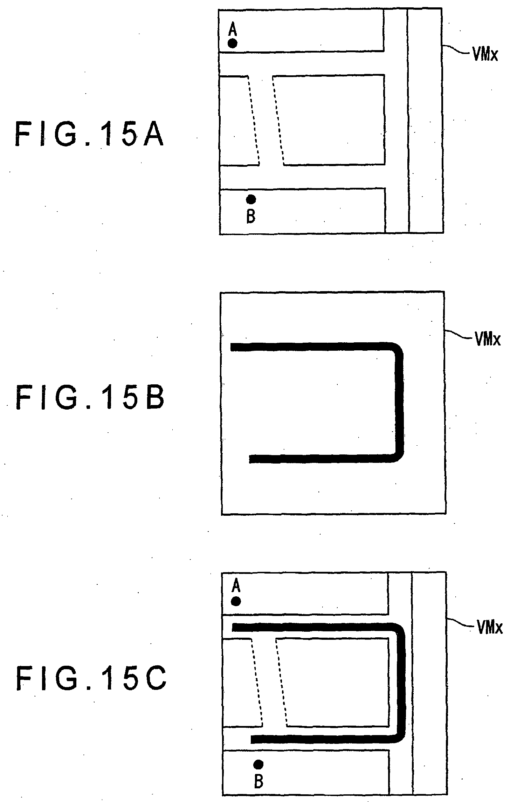

Figs. 15A, 15B and 15C are illustrations each showing a status of acquiring the map information according to the embodiment.
Fig. 15A: a screen before update
Fig. 15B: a screen after updating only a display data
Fig. 15C: a screen after updating the map information

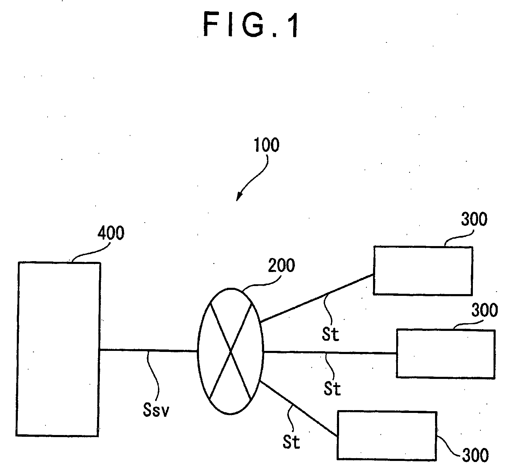

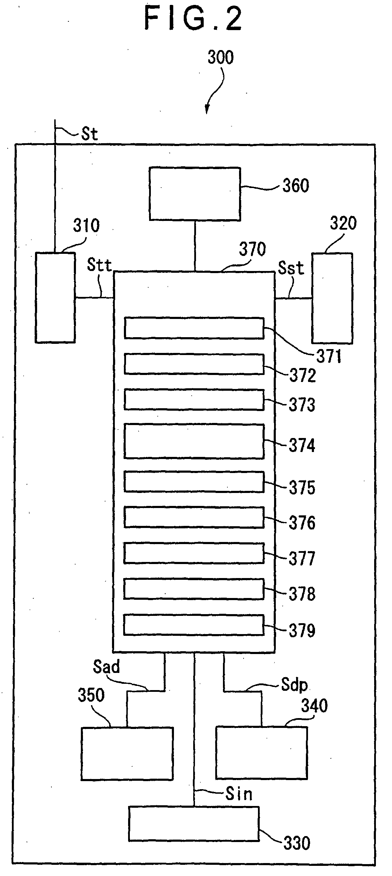

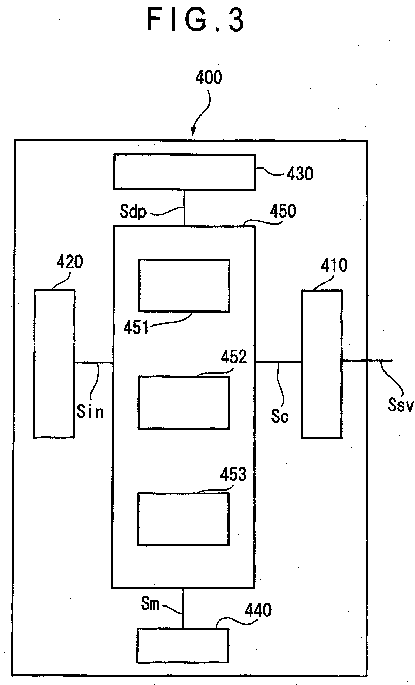

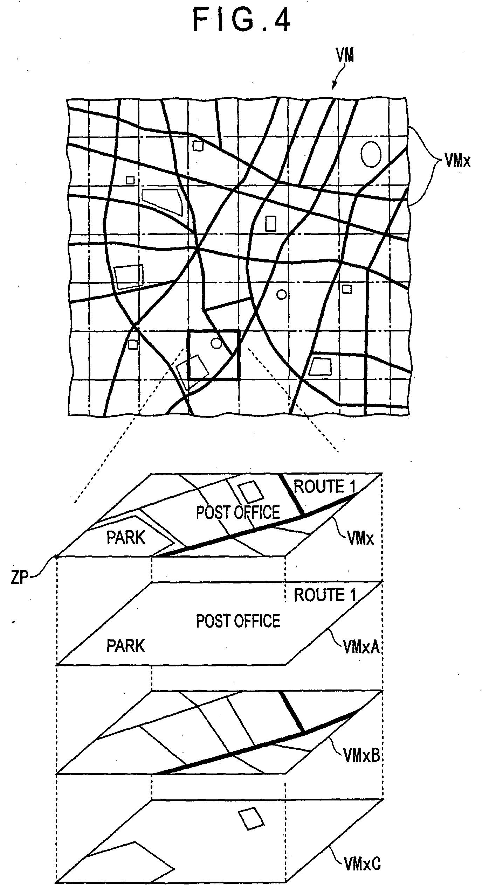

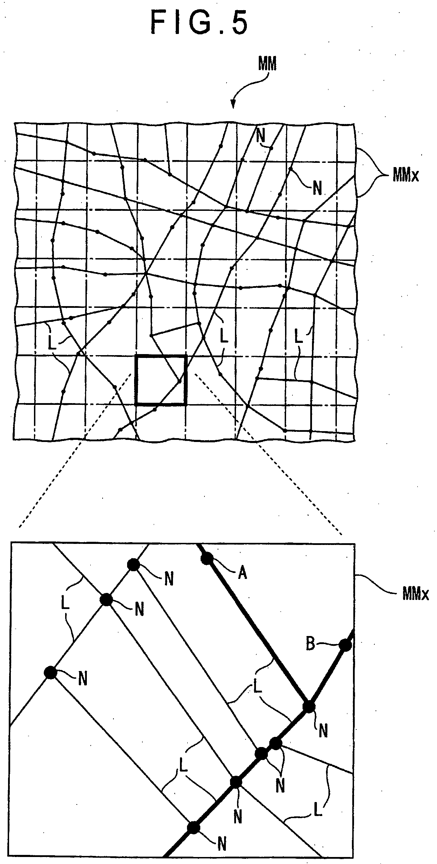

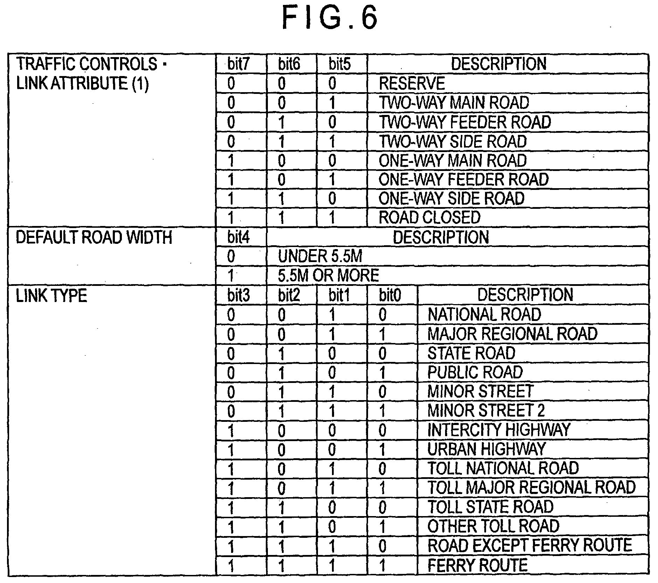

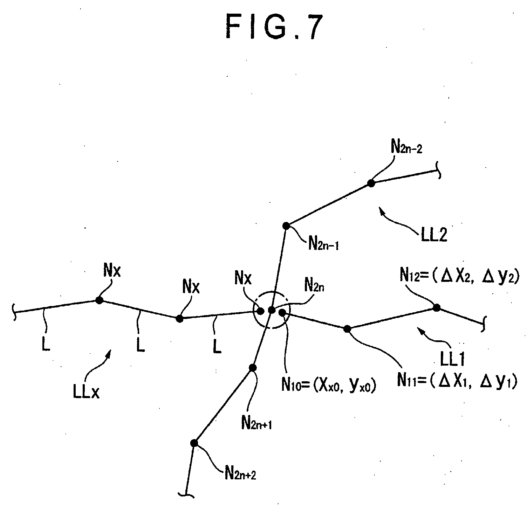

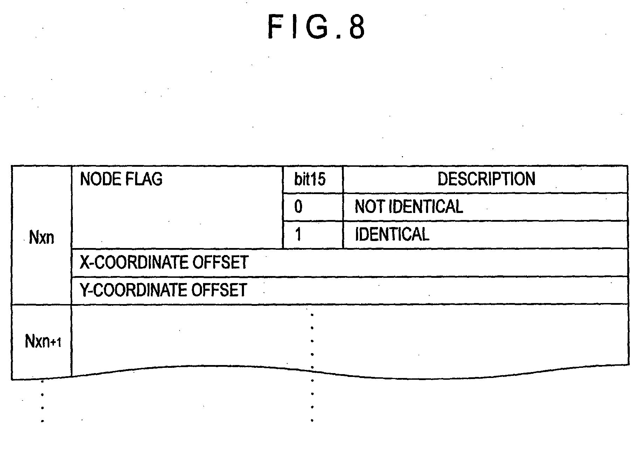

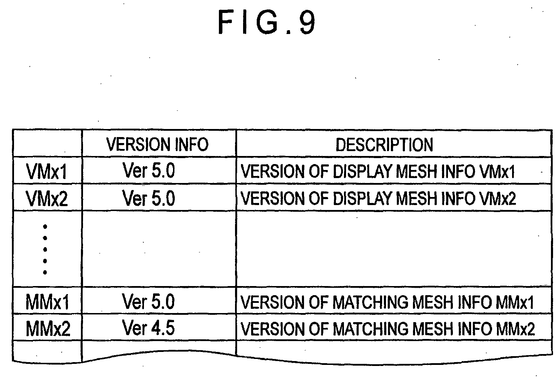

An embodiment of the present invention will be described below with reference to attached drawings. In the embodiment, a communication navigation system is designated as an example of a map information processing system of the present invention. Fig. 1. is a block diagram schematically showing structure of a navigation system according to the embodiment. Fig. 2 is a block diagram schematically showing structure of a terminal unit. Fig. 3 is a block diagram schematically showing structure of a server unit. Fig. 4 is a conceptual diagram schematically showing table structure of a display data of a map information. Fig. 5 is a conceptual diagram schematically showing table structure of a matching data of the map information. Fig. 6 is an illustration that shows table structure of a linked-line block information. Fig. 7 is an illustration that shows relation between nodes and links in the matching data. Fig. 8 is an illustration that shows table structure of a point information. Fig. 9 is an illustration that shows table structure of a version information.

### [Structure of Navigation System]

In Fig. 1, a reference numeral 100 denotes the communication navigation system as a map information processing system. The navigation system 100 provides guidance according to the traveling state of a movable body such as a vehicle, an aircraft and a ship. The navigation system 100 has a network 200, a terminal unit 300 functioning as a map information processing device and a server unit 400.

The terminal unit 300 and the server unit 400 are connected to the network 200. The terminal unit 300 and the server unit 400 are connected each other over the network 200 in a manner such that information can be sent/received between them. The network 200 may be Internet based on a general-purpose protocol such as TCP/IP protocol, an intranet, a LAN (Local Area Network), a communication network and a broadcasting network that have a plurality of base stations capable of sending/receiving information by way of a radio medium, or the radio medium itself that realizes direct information exchange between the terminal unit 300 and the server unit 400. The radio medium may be any one of electric waves, light beams, acoustic waves and electromagnetic waves.

The terminal unit 300 may be, for example, an on-board unit installed in a vehicle as a movable body, a portable unit, a PDA (Personal Digital Assistant), a mobile phone, a PHS (Personal Handyphone System) or a portable personal computer. The terminal unit 300 acquires the below-described map information delivered by the server unit 400 over the network 200. On the basis of the map information, the terminal unit 300 displays information on a current position and a destination, searches for and displays a route to the destination and predetermined shops nearby, or displays information on service contents of the shops. The terminal unit 300, as shown in Fig. 2, has a transceiver 310 as a map information acquiring section, a sensor section 320, a terminal input section 330, a terminal display 340, a voice output section 350, a memory 360 as a terminal storage and a processor 370.

The transceiver 310 is connected to the server unit 400 over the network 200, and also connected to the processor 370. The transceiver 310 can receive a terminal signal St from the server unit 400 over the network 200. When acquiring the terminal signal St, the transceiver 310 performs a preset input interface processing so as to output the terminal signal St as a processing terminal signal Stt to the processor 370. The transceiver 310 can also input the processing terminal signal Stt from the processor 370. When acquiring the processing terminal signal Stt to be input, the transceiver 310 performs a preset output interface processing so as to send the processing terminal signal Stt as the terminal signal St to the server unit 400 over the network 200.

The sensor section 320 detects the traveling state of the vehicle, i.e. a current position and the driving status so as to output the state as a predetermined signal Ssc to the processor 370. The sensor section 320, for instance, has a GPS (Global Positioning System) receiver (not shown) and various sensors (not shown) such as a speed sensor, a direction sensor and an acceleration sensor. The GPS receiver receives an electric navigation wave output from a GPS satellite (not shown), which is an artificial satellite, by way of a GPS antenna (not shown). Then, the GPS receiver computes an assumed coordinates value of the current position on the basis of a signal corresponding to the received electric navigation wave and outputs the assumed coordinates values GPS data to the processor 370.

The speed sensor included in the sensor section 320 is arranged on the vehicle so as to detect driving speed and actual acceleration of the vehicle on the basis of a signal that changes in response to the vehicle speed. The speed sensor reads a pulse signal, a voltage value and the like output by the revolution of the axles and the wheels of the vehicle. Then, the speed sensor outputs the detected information on the pulse signal, the voltage values etc. to the processor 370. The direction sensor is arranged on the vehicle and provided with a so-called gyro-sensor (not shown) so as to detect a direction of the vehicle, i.e., a driving direction of the vehicle for advancing. The direction sensor outputs a signal representing the detected information on the driving direction to the processor 370. The acceleration sensor is arranged on the vehicle so as to detect the acceleration of the vehicle in the driving direction thereof. The acceleration sensor converts the detected acceleration into a sensor output value i.e., the detected information based on the pulse and the voltage, and then output the sensor output value to the processor 370.

The terminal input section 330, which may be a keyboard, a mouse or the like, has various operation buttons (not shown) for an input operation. The input operation with the operation buttons includes, for instance, configuration for setting operational preferences for the terminal unit 300. More specifically, the operation buttons may be used: to issue an instruction for carrying out a communication operation as an acquisition request information for acquiring information over the network 200; to specify contents of information to be acquired and an acquisition criteria; to set a destination; to retrieve information; and to display the driving status as the traveling state of the vehicle. When the configuration is input, the terminal input section 330 outputs a predetermined signal Sin to the processor 370 so as to set the configuration. Note that in the terminal input section 330, without limiting to the operation buttons, a touch panel provided at the terminal display 340 or voice may be employed for the input operation to specify various configurations.

The terminal display 340 is controlled by the processor 370 to display a signal Sdp representing an image data sent from the processor 370. The image data may be an image data representing the below-described map information and a retrieval information sent form the server unit 400, a TV image data received by a TV receiver (not shown), an image data stored in a recording medium such as an optical disk or a magnetic disk and read by a drive, i.e. an external device, and an image data in the memory 360. The terminal display 340, to be specific, employs a liquid crystal panel, an organic EL (electroluminescence) panel, a PDP (Plasma Display Panel) or a CRT (Cathode-ray Tube) etc.

The voice output section 350 has a voicing section such as a speaker (not shown). The voice output section 350 is controlled by the processor 370 to output various signals Sad, which may be voice data sent from the processor 370, in voice form by using the voicing section. Information output in voice form, which includes, for example, the driving direction and the driving status of the vehicle, is provided to a passenger such as a driver of the vehicle for navigating the vehicle. The voicing section can appropriately output, for example, a TV voice data received by a TV receiver and a voice data recorded on an optical disk or a magnetic disk. Instead of having the voicing section, the voice output section 350 may use a voicing section equipped on the vehicle instead.

The memory 360 appropriately stores various information acquired over the network 200, the configurations input by the terminal input section 330, a music data, an image data and the like. The memory 360 also stores various programs running on an OS (Operating System) for controlling the whole operation of the terminal unit 300. Note that the memory 360 may have a drive or a driver for storing data in HD (Hard Disk) or an optical disk in a readable form.

The processor 370 has various input/output ports (not shown) including, for example, a communication port connected to the transceiver 310, a GPS receiving port connected to the GPS receiver, sensor ports connected respectively to various sensors, a key input port connected to the terminal input section 330, a display control port connected to the terminal display 340, a voice control port connected to the voice output section 350 and a memory port connected to the memory 360. The processor 370 has various programs such as a current position recognizer 371 functioning as a current position information acquisition section, a destination recognizer 372 functioning as a destination information acquisition section, an information retriever 373, a version information detector 374 functioning also as a determining section, a guidance providing section 375, a display controller 376, a map matching section 377 as a correction section, a coordinates matching section 378, a re-search section 379 and the like. The processor 370 further includes an internal time piece (not shown) that enables to acquire a time information on the current date and the time.

The current position recognizer 371 recognizes the current position of the vehicle. More specifically, it calculates a plurality of current assumed positions of the vehicle on the basis of the speed data and the direction data output respectively from the speed sensor and the direction sensor in the sensor section 320. The current position recognizer 371 further recognizes the current assumed coordinates values of the vehicle on the basis of the GPS data on the current position output from the GPS receiver. Then, the current position recognizer 371 compares the calculated current assumed positions with the recognized current assumed coordinates value, and calculates the current position of the vehicle on a map information separately acquired so as to recognize the current position.

The current position recognizer 371 determines a slope angle and an altitude of a drive road on the basis of the acceleration data output from the acceleration sensor and calculates the current assumed position of the vehicle so as to recognize the current position. In other words, the current position of the vehicle can accurately recognized even if the vehicle is on an intersection with an overpass or on an elevated highway where roads are mutually overlapping in a two-dimensional view. Furthermore, when the vehicle is running on a mountain road or a slope, the recognizer corrects the difference between the travel distance obtained only on the basis of the speed and the direction data and the actual driving distance by using the detected slope angle of the road to accurately recognize the current position.

The current position recognizer 371 can recognize not only the current position of the vehicle as described above but also a starting point, i.e. an initial point specified by the terminal input section 330 as the current assumed position. Various information acquired by the current position recognizer 371 are appropriately stored in the memory 360.

The destination recognizer 372, for instance, acquires a destination information on the destination specified with the input operation at the terminal input section 330 and recognizes the position of the destination. The specified destination information includes, for example, coordinates such as latitude and longitude, addresses, telephone numbers and various information that identify a location. Such destination information recognized by the destination recognizer 372 is appropriately stored in the memory 360.

The information retriever 373 acquires the various information being stored in the memory 360 and associated with the retrieval information on the basis of the retrieval information that is included in the information acquired by the transceiver 310. Specifically, for example, an item information to be retrieved is shown on the terminal display 340 by using a list screen, a number key screen for inputting a numeric value like numbers, and a character input screen for inputting characters such as Japanese alphabet and English alphabet. Then the memory 360 appropriately acquires the hierarchically arranged item information with the input operation at the terminal input section 330. In this way, the information is retrieved.

The version information detector 374 acquires a version information of the below-described map information acquired from the server unit 400, i.e., an information on revision status of the map information, and recognizes the revision status of the current map information. Then the version information detector 374 outputs the acquired version information to be stored in the memory 360.

The guidance providing section 375 provides guidance in visual form by using the terminal display 340 or in voice form by using the voice output section 350. The guidance is related to the travel of the vehicle, for instance, the contents for assisting the drive of the vehicle on the basis of a travel route information and a feature guidance information acquired previously according to the driving status and stored in the memory 360. The guidance providing section, for instance, displays a predetermined arrow and a symbol on the screen of the terminal display 340. The guidance providing section also provides messages such as "Turn right toward YY at the intersection of XX in 700 m ahead." "The vehicle is off the travel route. "and "There is a traffic jam in the route ahead" in voice form by using the voice output section 350.

The display controller 376 controls the terminal display 340 and instructs the terminal display 340 to display various information. Upon the control of the display controller 376, the terminal display 340 can also display various screens for retrieving information with the information retriever 373.

The map matching section 377 performs a map matching processing for appropriately displaying the current position recognized by the current position recognizer 371 on the basis of the below-described map information acquired by the server unit 400. In the map matching processing, the current position information is appropriately corrected or amended to avoid locating the current position overlaid onto the map displayed on the terminal display 340 off the road, which is an element constituting the map displayed on the terminal display 340, and the corrected information is displayed. In the map matching processing, a below-descried map matching data MM is utilized as the map information.

The coordinates matching section 378 performs coordinates matching processing for determining whether two or more sets of point information, i.e., information on nodes N in the below-described matching data MM in the map information acquired from the server unit 400 indicate an identical point or not. Namely, the coordinates matching section 378 acquires the point information on the nodes N in the matching data MM and reads coordinates information that constitutes the point information. Specifically, the coordinates matching section 378 calculates the coordinates values such as latitude and longitude on the basis of the coordinates values of the coordinates information and an offset amount. If the nodes N have identical coordinates values (as shown in a chained line in Fig. 7), the coordinates matching section 378 reads flag information constituting the point information on the nodes N and determines whether the node flags are "1" or "0". If both of the node flags are "1", the nodes N indicate an identical point, which may be an intersection. Therefore, the coordinates matching section 378 determines that roads are arranged in a manner that links L, each of which is connected to any of the nodes N and constitutes own linked-line block information, are crossing each other. If at least one node flag of the two sets of point information is "0", the nodes N do not indicate an identical point, and represent, for example, an intersection with an overpass. Then, the coordinates matching section 378 determines that roads are arranged in a manner that links L, each of which is connected to respective nodes N and constitutes own linked-line block information, are not crossing each other.

The re-search section 379 re-searches for a secondary travel route to the destination by using a matching mesh information MMx acquired from the below-described server unit 400 when the current position is off the travel route searched by and acquired from the server unit 400. More specifically, the re-search section 379 acquires the current position information, the destination information, and the configuration information for setting the secondary route. Then, on the basis of the acquired information, the re-search section 379 searches for a road, which may be available for traffic, different from the travel route previously acquired from the server unit 400 and searches the secondary route with shorter travel time, that with shorter travel distance, or that without a traffic jam and a traffic regulation. At this time, the re-search section 379 uses the matching mesh information MMx in the matching data MM in the map information, which has been acquired from the server unit 400 upon the travel route search. Note that, in re-searching for the secondary travel route, the re-search section 379 appropriately searches for the secondary route on the basis of the road arrangement determined with the coordinates matching processing performed by the coordinates matching section 378. The travel route information includes, for example, the route guidance information for assisting the drive with navigation during the drive of the vehicle. The route guidance information is appropriately displayed or output in voice form at the terminal unit 300 for assisting the drive. The re-search section 379 determines that the secondary route can not be searched when, for example, the area covered by the previously acquired matching mesh information MMx is too small to detect a travel route other than the previously acquired travel route; or when a processing ability of hardware is limited due to capacity shortage of the memory 360 of the terminal unit 300 and the like. In such cases, the re-search section 379 sends a signal to the server unit 400 to re-search for the secondary travel route.

The server unit 400 can send/receive information to/from the terminal unit 300 over the network 200. In addition, the server unit 400 can retrieve various information over the network 200 from servers (not shown) that are installed in various public offices including the Meteorological Agency and the National Police Agency, private organizations, the Vehicle Information and Communication System (VICS) and business enterprises. The information acquired by the server unit 400 includes a travel information, i.e., various travel related information that is utilized during the travel of the vehicle such as a weather information, a traffic information including a traffic jam, a traffic accident, a road construction and traffic regulation, and a shop information including a gasoline station and a restaurant etc. As shown in Fig. 3, the server unit 400 has an interface 410, an input section 420, a display 430, a storage 440, a CPU (Central Processing Unit) 450 as a computing section and the like.

The interface 410 performs a preset input interface processing on a server signal Ssv input over the network 200 so as to output the server signal Ssv as the processing server signal Sc to the CPU 450. When the CPU 450 inputs the processing server signal Sc to be sent to the terminal unit 300 to the interface 410, the interface 410 performs preset output interface processing on the input processing server signal Sc so as to output the processing server signal Sc as a server signal Ssv to the terminal unit 300 over the network 200. Note that the server signal Ssv can be appropriately output only to a predetermined terminal unit 300 on the basis of the information described in the server signal Sc.

The input section 420, which may be a keyboard, a mouse or the like, has various operation buttons (not shown) for an input operation, just like the terminal input section 330. The input operation with the use of the operation buttons are employed to specify configuration, more specifically, to set operational preferences for the server unit 400, to set information to be stored in the storage 440, and to update information stored in the storage 440 and the like. When the configuration is input, the input section 420 outputs a signal Sin corresponding to the configuration to the CPU 450 so as to specify the configuration. Note that not limiting to the operation buttons, a touch panel provided on the display 430 or voice may be used for the input operation to specify various configurations.

The display 430, just like the terminal display 340, is controlled by the CPU 450 to display a signal Sdp representing an image data sent from the CPU 450. The image data may be acquired from the storage 440 or respective servers.

The storage 440 stores various information and the map information received from the terminal unit 300 or an external server etc. in a readable form. Specifically, the storage 440 has a storage medium (not shown) for storing information, a drive or a driver (not shown) for storing information in the storage medium in a manner that the information can be read from the storage medium. Information to be stored may include, for example, information input with the input operation at the input section 420, and the contents of the information stored with the input operation can be appropriately updated. The storage 440 also stores various programs running on an OS (Operating System) for controlling the whole operation of the server unit 400 and the navigation system 100 as information.

The map information as information includes a display data VM, i.e., so-called POI (Point Of Interest) data as shown in Fig. 4, a matching data MM as shown in Fig. 5, a map data for travel route search, a display version information and a matching version information as shown in Fig. 6 and the like.

The display data VM includes, for example, a plurality of display mesh information VMx each of which has a unique number. To be more specific, the display data VM is divided into a plurality of display mesh information VMx each of which relates to an area. The display data VM is formed with the plurality of display mesh information VMx continuously arranged in a matrix form. The display mesh information VMx may be further divided into a plurality of downscale display mesh information VMx each of which appropriately relates to a smaller area. The display mesh information VMx is rectangular shaped with each side thereof having a predetermined length, i.e., a length reduced from the actual geographic length according to the scale of the map, and a predetermined comer thereof having absolute coordinates ZP relative to a whole map information, e.g., a global map.

The display mesh information VMx is, for instance, constituted by a name information VMxA such as intersection names, a road information VMxB and a background information VMxC. The name information VMxA is constituted by table structure for data that positions and displays, e.g., an intersection name and a regional name in the area, at a predetermined position according to the spatial relationship with the absolute coordinates ZP. The road information VMxB is constituted by table structure for data that positions and displays a road in the area at a predetermined position according to the spatial relationship with the absolute coordinates ZP. The background information VMxC is constituted by table structure for data that positions and displays a symbol representing a famous place or building, an image information representing the famous place or the building at a predetermined position according to the spatial relationship with the absolute coordinates ZP.

The matching data MM, just like the display data VM, is divided into the plurality of matching mesh information MMx each of which has a unique number and relates to an area. The matching data MM is formed with the plurality of matching mesh information MMx continuously arranged in a matrix form. The matching mesh information MMx may be further divided into a plurality of matching mesh information MMx to be located at a lower layer each of which relates to a smaller area. Each matching mesh information MMx has a rectangular shape with each side thereof having a predetermined length, i.e., a length reduced from the actual geographic length according to the scale of the map. At a predetermined comer thereof, absolute coordinates ZP relative to a whole map information, e.g., a global map is contained. Note that the matching mesh information MMx may have data structure that represents an area different from the area represented by the display mesh information VMx, that is, the matching mesh information MMx may use a scale for the area division different from that used by the display mesh information VMx. If a same scale is used, a unique number information may be used for associating the data. If a different scale is used, the absolute coordinates may be used for associating data.

The matching data MM is used for the map matching processing for correcting the position of the vehicle on the screen to be located on a road so as to avoid displaying errors such that the vehicle is displayed on a building instead of the road, when the traveling state of the vehicle is overlaid onto the map information on the screen. The matching data MM has the plurality of linked-line block information.

As shown in Fig. 6, the linked-line block information is constituted by table structure for data in which a plurality of links L, that are segment information connecting nodes N (shown as dots in Fig. 5) as the point information constituting roads and representing points, are mutually associated according to a predetermined rule. Specifically, the linked-line block information is associated with a linked-line LL, where the link L, i.e. a predetermined length of the road, are sequentially connected as shown in Figs. 5 and 7, e.g., KOSHU street and OME street. Each link L has a unique number i.e., a unique segment information (hereafter referred to as a link ID) and a node information that may be a unique number indicating the two nodes N connected by a link L.

Each node N may represent a knotting point such as an intersection of roads, a turning point, a branching point or a joining point. Information on the node N has a unique point information that is a unique number assigned to each node N in the linked-line block information, coordinates information representing the position where each node N is located, and flag information that is branching information telling if the node N represents an intersection or a branching point where a plurality of links cross or not. There may be the nodes N that only have the unique point information without the flag information and the coordinates information for simply representing the shape of a road, or the nodes N additionally having an attribute information that represents the road arrangement such as width of a tunnel and a road. The nodes N without the flag information for simply representing the road shapes are not used by the below-described coordinates matching section 378 for recognizing the identification on the point information.

As shown in Fig. 7, in case of a node Nx0 corresponding to a starting point of the link L of the road that constitutes linked-line block information, the coordinates information is information on coordinates relative to the absolute coordinates ZP. As shown in Figs. 7 and 8, in case of a node Nx1 connected to the node Nx0 for the starting point with a link L, a node Nx2 connected to the node Nx1 with a link L and the following node Nxn, the coordinates information is information on an offset amount from the node Nx0 for the starting point or from a connected node Nxn. The node N to be a standard for the offset amount is specified in accordance with record order of the table structure, that is, the offset amount form the preceding node N constitutes the coordinates information.

The flag information represents whether the points represented by the nodes are identical or not and represents the road arrangement on the basis of relation with other nodes. To be more specific, the flag information, as shown in Fig. 8, is represented by the node flag "0" or "1". "1" means that the nodes N for another road, or the nodes N in another linked-line block information, indicate an identical position which may be an intersection. "0" means that the position is identical in a two-dimensional view but not identical in reality and may be an intersection with an overpass.

Further, the linked-line block information in the matching data MM is associated with information on the road arrangement that describes, for example, number of lanes, whether it is a main line or not, whether it is a national road or a state road, a road type such as a tall road, a tunnel structure and the like. Based on the information on such road arrangement, a road can be displayed on a map corresponding to the display data VM.

The map information for travel route search, similar to the matching data, has table structure including the point information for representing the points such as the nodes N for representing a road and the segment information for connecting points such as the links L. The information is structured to represent a road for searching for a travel route.

The version information, as shown in Fig. 9, includes the display version information associated with the display data VM on revision of the display data VM and the matching version information associated with the matching data MM on revision of the matching data MM. The display version information and the matching version information are associated with each of the display mesh information VMx and the matching mesh information MMx. Instead of giving the display version information and the matching version information to each of the display mesh information VMx and the matching mesh information MMx, one display version information and one matching version information may be given to the whole display data VM and matching data MM.

The storage 440, for instance, stores the retrieval information for acquiring an information of a predetermined point in the map information. The retrieval information provided upon the search request from the terminal unit 300 includes various information such as contents and guidance for names of a state, a city, a region and a point, the area of which are sequentially divided on the map information, and various information on a shop as a point. The retrieval information has table structure with a layered tree structure where each item information is associated with one of the layer.

The storage 440 stores a personal information on the user who uses the navigation system 100 with the terminal unit 300. The personal information includes a name, an address, an ID number assigned to each user, a password, a type of the terminal unit 300 for the use of the navigation system 100, an address number for sending/receiving information to/from the terminal unit 300 and a unique terminal information of the terminal unit 300. Furthermore, the storage 440 stores various information that is used for performing the navigation processing in a manner readable by the CPU 450.

The CPU 450, with the use of various programs stored in the storage 440, includes a map output section 451, a coordinates matching section (not shown), a route processor 452 as a travel route search section, a retriever 453 and the like.

When a processing server signal Sc is input, according to the information indicated in the processing server signal Sc for requesting a delivery of information on the map information, the map output section 451 retrieves the requested information, such as the display data VM and the matching data MM corresponding to a predetermined area, from the map information stored in the storage 440 and reads it as a memory signal Sm. When reading the display data VM and the matching data MM, the map output section 451 also retrieves corresponding display version information and matching version information and reads them as a memory signal Sm. The map output section 451 appropriately converts the read memory signal Sm into the processing server signal Sc, outputs the memory signal Sm on the basis of the processing server signal Sc to predetermined or all terminal units 300 via the interface 410 and the network 200, and delivers the requested information in the map information.

Further, the map output section 451 compares the version information sent from the terminal unit 300 and the version information stored in the storage 440 to determine whether the version information are identical or not. When determining that the version information are not identical, the map output section 451 determines that the map information stored in the terminal unit 300 is old and reads a map information associated with the version information, i.e., the newest display data VM or matching data MM to deliver it to the terminal unit 300. The version information may be compared according to, for example, number representing revision status.

The coordinates matching section, just like the above-described coordinates matching section of the terminal unit 300, performs coordinates matching processing for determining whether two or more sets of point information, i.e., information on a node N in the matching data MM in the map information indicate an identical point or not.

When the processing server signal Sc is input, according to the information indicated in the processing server signal Sc for requesting a route search, the route processor 452 computes and searches for the travel route using the map information stored in the storage 440 and generates the memory signal Sm. The route processor 452 appropriately converts the generated memory signal Sm into the processing server signal Sc, outputs the memory signal Sm on the basis of the processing server signal Sc to a predetermined terminal unit 300 via the interface 410 and the network 200, and provides the travel route.

More specifically, the route processor 452 acquires a current position information, a destination information, and a configuration information for setting a route from the terminal unit 300. Then, on the basis of the acquired information, the route processor 452 searches for a road, which may be available for traffic, by using the map information for travel route search, sets a route with shorter travel time, a route with shorter travel distance, or a route without a traffic jam and a traffic regulation, and generates a travel route information as the memory signal Sm. Note that in searching for the travel route, the route processor 452 might use the matching data MM in the map information other than the map information for travel route search. This applies to, for instance, the case where the route processor 452 searches for the travel route including and a narrow road such as a back road which is not contained in the map information for the travel route search. When the matching data MM is used, the route is appropriately searched according to the road arrangement determined by the coordinates matching section at the CPU 450. The travel route information includes, for example, the route guidance information for assisting the drive with navigation during the drive of the vehicle. The route guidance information is appropriately displayed or output in voice form at the terminal unit 300 for assisting the drive.

When the processing server signal Sc is input, according to the information indicated in the processing server signal Sc for requesting a retrieval of the retrieval information, the retriever 453 hierarchically retrieves the retrieval information stored in the storage 440 on the basis of the item information and reads it as the memory signal Sm. The retriever 453 appropriately converts the read memory signal Sm into the processing server signal Sc, outputs the memory signal Sm on the basis of the processing server signal Sc to the predetermined terminal unit 300 via the interface 410 and the network 200, and delivers the retrieval information.

According to the signal Sin input from the input section 420 by the input operation at the input section 420, the CPU 450 appropriately computes with the contents corresponding to the input operation, and appropriately generates a signal Sdp. Then the CPU 450 appropriately outputs the generated various signals to the display 430, the interface 410 and the storage 440 and operates them so as to execute the input contents.

### [Operation of Navigation System]

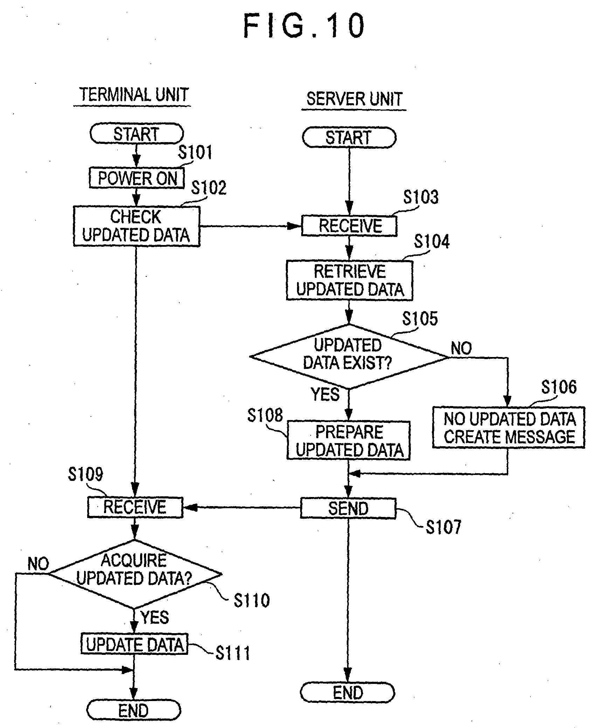

The operation of the navigation system 100 will be described below in reference to the drawings. Fig. 10 is a flowchart showing operation for acquiring the map information when the power is turned on. Figs. 11A to 11C and Figs 13A to 15C are illustrations each showing a status of acquiring the map information. Figs. 11A, 13A, 14A and 15A each shows a screen before update, Figs. 11B, 13B, 14B and 15B each shows a screen after updating only a display data, and Figs. 11C, 13C, 14C and 15C each shows a screen after updating the map information. Fig 12 is a flowchart that shows how the navigation system operates to search for a travel route. The flowchart in Fig. 12 shows operation for acquiring the map information when searching for a route.

### (Acquisition of Map Information)

Firstly, a user on the vehicle turns on the terminal unit 300 to supply electric power (step S101). As the electric power is supplied, the processor 370 controls the terminal display 340 so as to display a main menu and prompt the user to specify the contents to be operated by the terminal unit 300. Then the processor 370 operates the version information detector 374 to read a version information of a map information stored in the memory 360, and the transceiver 310 sends it to the server unit 400 over the network 200. When the version information is sent, a unique terminal information for identifying the terminal unit 300 is sent together (step S102).

The server unit 400 operates the map output section 451 to recognize the version information sent from the terminal unit 300 (step S103) and reads a version information stored in the storage 440 (step S104). Then the server unit 400 compares the version information in the terminal unit 300 with the version information in the storage 440 and determines whether they are identical or not (step S105).

In the step S105, when the map output section 451 determines that the version information in the terminal unit 300 is identical to the version information in the storage 440, the map output section 451 determines that the map information in the terminal unit 300 is the newest and generates a signal indicating that there is no updated data (step S106). More specifically, the server unit 400 reads a message information prestored in the storage 440. Then the CPU 450 sends the message information to the terminal unit 300 according to the unique terminal information received in the sep S103 (step S107).

In the step S105, when the map output section 451 determines that the version information in the terminal unit 300 is not identical to the version information in the storage 440, or, determines that display version information are not identical although matching version information are identical, the map output section 451 determines that a display data VM in the terminal unit 300 is older than a display data VM in the server unit 400. This applies to a case in which, for example, an easily creatable display data VM is updated in the server unit 400 beforehand. In response to this determination, the map output section 451 reads the display data VM corresponding to the display version information read from the storage 440 (step S108) and proceeds to the step S 107 to deliver the display data VM and the display version information thereof to the corresponding terminal unit 300 according to the acquired unique terminal information. When they are delivered, a revision date information describing a scheduled revision date is sent together if associated with the display data VM.

In the step S105, when the map output section 451 determines that the version information in the terminal unit 300 is not identical to the version information in the storage 440, or, determines that the matching version information are not identical although the display version information are identical, the map output section 451 determines that the matching data MM is not updated and old although the display data VM in the terminal unit 300 is already updated. In response to this determination, the map output section 451 proceeds to the step S108 to read a matching data MM corresponding to the matching version information read from the storage 440 and proceeds to the step S107 to deliver the matching data MM and the corresponding matching version information to the corresponding terminal unit 300 according to the acquired unique terminal information.

In the step S105, when the map output section 451 determines that the version information in the terminal unit 300 is not identical to the version information in the storage 440, or, determines that both the display version information and the matching version information are not identical, the map output section 451 determines, for example, that the terminal unit 300 is not used for a long period and the map information therein is not properly updated. In response to this determination, the map output section 451 proceeds to the step S108 to read a map information corresponding to the version information read from the storage 440 and proceeds to the step S107 to deliver the map information to the terminal unit 300 according to the acquired unique terminal information.

The terminal unit 300 receives the information sent in the step S107 (step S109) and determines whether the updated map information and version information are acquired or not (step 110). When the processor 370 recognizes that the map information is not acquired, or, recognizes that the message information is acquired in the step S110, the display controller 376 displays the message on the terminal display 340 and the process for acquiring the map information is ended. In this status, if the map information stored in the terminal unit 300 is displayed on the terminal display 340, the screen, for example, shown in Fig. 11A appears.

When the processor 370 recognizes that the map information is acquired in the step S110, the memory 360 stores updated information by overwriting the map information and the version information with the acquired information (step S111) and ends the process for acquiring the map information.

More specifically, when the display data VM and the display version information thereof are acquired, they are updated. Then, the processor 370 of the terminal unit 300 generates a signal indicating that only the display data VM is acquired, or, indicating that the matching data MM corresponding to the display data VM is not acquired by, for example, writing a flag information as "1". In this status, if the map information stored in the terminal unit 300 is displayed on the terminal display 340, the screen, for example, shown in Fig. 11B appears. More specifically, since only the display data VM is updated, the element data of road in the display data VM, which is not displayed by the matching data MM, is displayed in a form different from other element data, for example, displayed in a blinking status or in different colors. When the revision date information is acquired together, the element data may be displayed in a different form corresponding to the number of days to the scheduled revision date.

When only the matching data MM and the matching version information are acquired, the memory 360 updates them in a manner described above. The processor 370 of the terminal unit 300 generates a signal indicating that the display data VM and the matching data MM are acquired in pairs by, for example, writing the flag information as "0". In this status, if the map information stored in the terminal unit 300 is displayed on the terminal display 340, the screen, for example, shown in Fig. 11C appears.

When both of the display data VM and the matching data MM are acquired together with the version information, the memory 360 updates them in a manner described above and the processor 370 writes the flag information as "0". In this status, if the map information stored in the terminal unit 300 is displayed on the terminal display 340, the screens, for example, shown in Figs. 11A and 11C appear.

The map information is thus appropriately updated when the power is turned on. This properly updates the map without any input operation and improves the convenience thereof. When the user, for example, retrieves a shop information or checks up the map after turning on the power, the user can smoothly retrieve the information or see the map as the map information is already updated.

In the event that the map information is not updated with the power being on for a long period, as long as the revision date information is acquired, the processor 370 performs the above described operation for acquiring the matching data MM from the server unit 400 to acquire the matching data MM when recognizing that the current date clocked by the internal time piece reaches the scheduled revision date in the revision date information. Then, when the matching data MM is acquired, the display data VM and the matching data MM have the same version information. Accordingly, the flag information becomes "0" and the different display form is changed to the display form used for others. Alternatively, at the same time when updating the matching data MM, the server unit 400 may update a display data VM constituted by an element data not using the different display form, and at the same time when the matching data MM is acquired, the display data VM corresponding to the matching data MM may be acquired together. With this, since the revision date information is sent together with the updated display data VM, the matching data MM corresponding to the display data VM can be automatically acquired. In the case that the matching data MM can not be acquired, a periodical acquisition may be the alternative method for the subsequent processing.

### (Route Search)

In searching for a route, as shown in Fig. 12, the user may specify processing, for example, for searching for a travel route with the input operation at the terminal input section 330. When the processor 370 recognizes that the processing for searching for the travel route is specified (step S201), the processor 370 instructs the terminal display 340 to display a screen for prompting the user to specify various information necessary for the travel route search such as the configuration information including a destination, a priority on the shortest distance or the shortest time. The processor 370 recognizes the various information necessary for the travel route search, sends a signal for requesting the travel route search together with the various information to the server unit 400 over the network 200, so that the route processor 452 of the server unit 400 executes the processing for searching for the travel route.

In other words, the processor 370 recognizes the current position by using the current position recognizer 371 (step S202) and also recognizes the specified destination by using the destination recognizer 372 (step S203). Specifically, the current position recognizer 371 calculates the current position of the vehicle on the basis of the speed data and the direction data respectively output from the speed sensor and the direction sensor in the sensor section 320 and the GPS data on the current position output from the GPS receiver, and acquires the current position information. The acquired current position information is appropriately stored in the memory 360.

The processor 370 controls the terminal display 340 to display a screen for prompting the user to specify the destination with the input operation at the terminal input section 330. When the user specifies the destination with the input operation at the terminal input section 330 according to the displayed instruction on the screen, the destination recognizer 372 acquires the destination information on the specified destination. The acquired destination information is appropriately stored in the memory 360.

Upon the destination input operation at the terminal unit 330, when requesting information on a point as the destination point, the user performs the input operation for requesting retrieval information on the point according to the displayed instruction displayed on the terminal display 340. According to the retrieval request for the retrieval information on the point, the processor 370 controls the transceiver 310 to send a signal that requests the retrieval of the retrieval information to the server unit 400. Upon the receipt of the signal, the server unit 400 appropriately operates the retriever 453, so that the downscale mesh information of each area hierarchically searches for the retrieval information on the destination by using, for instance, the map information to acquires the retrieval information associated with the destination point from the storage 440. Then the server unit 400 sends the acquired retrieval information on the destination to the terminal unit 300 via the interface 410 and the network 200. When the terminal unit 300 acquires the acquired retrieval information on the destination, the processor 370 appropriately controls the terminal display 340 to display the retrieval information.

If the retrieval information includes instructions for displaying a predetermined area of the map information including the destination, or if the user who recognized the retrieval information specifies to display the predetermined area with the input operation at the terminal unit 330, the server unit 400 sends the retrieval information as well as the display mesh information VMx corresponding to the area, so that the terminal display 340 appropriately displays at the terminal unit 300. In this way, the terminal unit 300 acquires and displays the desired map information. Thereafter, the user appropriately sets the destination with the input operation at the terminal input section 330 by, for example, moving a cursor on the map displayed on the screen so as to designate the point information on the destination. When the point information on the destination is designated, the destination recognizer 372 of the processor 370 recognizes the point information on the destination as the destination information to be appropriately stored in the memory 360.

The processor 370 controls the terminal display 340 to display a screen for prompting the user to input the configuration, i.e., criteria for the travel route search. When the user specifies the configuration with the input operation at the terminal input section 330 according to the displayed instruction on the screen, the processor 370 acquires the configuration information on the specified configuration (step S204). The acquired configuration information is appropriately stored in the memory 360. The processor 370 operates the version information detector 374 to read the version information of the map information stored in the memory 360 (step S205).

Then, the processor 370 controls the transceiver 310 to send a signal for requesting the travel route search together with the current position information, the destination information, the configuration information and the version information stored in the memory 360 to the server unit 400 (step S206). The server unit 400 acquires the various information sent from the terminal unit 300 (step S207) and searches for the route according to the signal for requesting the travel route search (step S208).

Specifically, the route processor 452 performs the route search processing to search for the travel route from the current position of the vehicle to the destination by using the map information for the travel route search in the map information stored in the storage 440 and the matching data MM according to the current position information, the destination information and the configuration information. For example, when searching for a major street whose data is accumulated and maintained in the map information for the travel route search, the route search processing is performed by using the map information for the travel route search. On the other hand, when searching for a minor street whose data is not accumulated in the map information for the travel search, the route from a minor street to a major street is searched by using the matching data MM. As for the route search processing with the use of the matching data MM, the processing is carried out after the coordinates matching section determines whether the plurality of nodes N indicate the identical point or not to recognize the road arrangement based on the relations between links L. The route processor 452 detects a plurality of travel routes, selects some of them according to the acquired configuration information, and generates the travel route information on some travel routes that satisfy the criteria specified by the user.

The server unit 400 compares the version information acquired in the step S207 with the version information stored in the storage 440 to determine whether they are identical or not (step S209). Just like the case when the power is turned on, when the server unit 400 determines that the version information are identical, the server unit 400 controls the interface 410 to send the travel route information acquired in the route search processing to the predetermined terminal unit 300 according to the unique terminal information such as an ID (Identification) Number for identifying the terminal unit 300 that is sent together with the configuration information (step S210).

In the step S209, when the server unit 400 determines that the version information are not identical, the server unit 400 reads a display data VM or a matching data MM corresponding to the different version information from the storage 440 as described above (step S211). The server unit 400 proceeds to the step S210 to send the travel route information acquired in the route search processing together with the display data VM or with the matching data MM to the predetermined terminal unit 300.

Then, the processor 370 of the terminal unit 300 acquires the travel route information (step S212) and the memory 360 stores the acquired information (step S213). In the step 213, if the map information is acquired in the step S212, the memory 360 updates information by overwriting with the acquired map information as described above. Then the coordinates matching processing is performed on the acquired matching data MM (step S214) for recognizing the road arrangement, i.e., the road connection and the memory 360 appropriately stores the information. Thereafter, the processor 370 controls the terminal display 340 to display the travel route overlaid onto the acquired map information.

Subsequently, the processor 370 recognizes the traveling state of the vehicle based on the data output from the speed sensor, the direction sensor and the acceleration sensor at the sensor section 320 and the GPS data output from the GPS receiver. Then, the processor 370, by the guidance providing section, provides the guidance information on the travel of the vehicle in voice form or in visual form based on the recognized traveling state and the route guidance information contained in the travel route information acquired from the server unit 400 so as to navigate the vehicle (step S215).

To be more specific, the display controller 376 of the processor 370 connects the nodes N, which are contained in the matching mesh information MMx acquired from the server unit 400, with polylines. Then the processor 370 processes the polylines based on the road arrangement described in the linked-line block information constituting the matching data MM so that the terminal display 340 displays the road in the area corresponding to the matching mesh information MMx in which the travel route is contained. The display controller 376 overlays the name information VMxA and the background information VMxC, that are element data on elements constituting the map other than a road in the area corresponding to the matching mesh information MMx in the display mesh information VMx acquired by the server unit 400. The display controller further overlays the current position onto the displayed map.

At the time of the overlay of the current position, the map matching processing is performed on the basis of the matching data MM in order to avoid locating an indicator representing the current position information of the vehicle off the displayed road. Namely, the processor 370 appropriately corrects the current position information so that the current position on the screen is located on the matching data MM for the travel route. Thus the current position is displayed on the linked-line that is the sequence of links L. In this way, the current position is overlaid onto the map to provide the navigation. When the current position reaches the predetermined position, guidance on the travel direction and the like are provided in voice form or in visual form as described above.

During the travel of the vehicle, the guidance providing section 375 acquires traffic information including a traffic jam, a traffic accident, a road construction and a traffic regulation, a weather information and the like. In other words, the processor 370 of the terminal unit 300 appropriately acquires the traffic information and the weather information by the server unit 400 over the network 200. Then, when the acquired traffic information and the weather information imply that the traveling state of the vehicle may be affected or changed, the guidance providing section 375 provides guidance considering. such affect and change.

Further, when the guidance providing section 375 recognizes that the vehicle is positioned at a predetermined guidance position according to a feature guidance information and the current position information of the vehicle acquired previously from the server unit 400, the guidance providing section 375 provides the guidance related to the feature. Specifically, the guidance providing section 375 recognizes that the vehicle is positioned at the guidance position when recognizing that the vehicle has reached a position represented by a unique mesh information related to the guidance position. Then the guidance providing section 375 acquires a guidance of a feature associating with the guidance position from the server unit 400 or acquires a corresponding guidance information stored in the terminal unit 300 and provides the guidance information in voice form by using the voice output section 350 or in visual form by using the terminal display 340.

When the travel route is displayed using the map information stored previously without acquiring the updated map information from the server unit 400, for example as shown in Figs. 13A to 13C and Figs. 14A to 14C, the screens shown in Figs. 13C and 14C, in which the travel route information shown in Figs. 13B and 14B are overlaid onto the display data VM shown in Figs. 13A and 14A, are displayed. On the other hand, when only the display data is updated, as shown in Figs. 15A to 15C, the screen shown in Fig: 15C, in which the travel route information shown in Fig. 15B is overlaid onto the display data VM shown in Figs 15A, is displayed since a matching data MM corresponding to the updated road is missing.

If a map matching data corresponding to the screen shown in Fig. 14C is missing and the user recognizes a road displayed in the different form and dares to travel on the road, the map matching section 377 of the processor 370 can not perform the map matching processing since the matching data MM is missing. Accordingly, the processor 370 determines that the road is travelable according to the current position information, and the differently displayed area is displayed in the form same as other areas by the display controller 376 as shown in Fig. 14A. Since the matching data MM is not acquired, the flag information stays as "1", and it is recommended to prepare for acquiring the matching data MM when the power is turned on or a route search is performed next time. When the user travels on the same road again, the map matching processing may be performed according to the display data VM displayed in the form same as others. This further improves the convenience.

In the event where the route or the destination is changed during the travel or the like, the processor 370 recognizes that the current position is off the travel route. Then the re-search section 379 re-searches for a secondary travel route from the current position to the destination other than the travel route previously acquired by the server unit 400, that is, performs a reroute search. In the reroute search, the re-search section 379 re-searches for the secondary route by using the matching mesh information MMx that is acquired previously by the server unit 400. Then the navigation is continued based on the acquired secondary travel route. The reroute search may be performed by the server unit 400 just like the above described route search.

### [Advantage of Embodiment]

In the above embodiment as described earlier, when the display data VM of the map information acquired from the server unit 400 is the updated display data VM, i.e., update-display data having the element data for a road other than the roads represented by the matching data MM, the flag information is written as "1". Therefore, it is easily recognized with the simple flag informant that the matching data MM corresponding to the display data VM is not included. For example, the processing for separately acquiring the matching data MM can be easily realized. Also, by displaying the roads other than the roads represented by the matching data MM in the different form from others, the user can easily recognize that the corresponding matching data has not been updated yet. Accordingly, by immediately updating the display data VM that can be easily created and updating the matching data MM afterwards, the map information reflecting the most current information with the use the display data VM can be quickly provided to the user comparing with the conventional art that does not update the map information until the matching data MM, which requires longer creation time, is updated.

With the simple structure in which the display data VM is associated with the display version information, it is easily determined whether the display data is updated or not according to the display version information. Further, since the matching data MM is associated with the matching version information, for example, the terminal unit 300 easily recognizes that the matching data MM is updated in the server unit 400. The map information can be easily acquired.

When only the display data VM is updated, the road not corresponding to the matching data MM is displayed in the different form from others. Therefore, it can be easily determined that the matching data MM is not updated thereby improving the convenience.

Since the map information is updated by automatically determining whether the map information is updated or not when the power is turned on, the recognition whether the map information is updated or not can be performed with a simple processing thereby improving the convenience.

Since the map information is updated when searching for the route, the user will not have a suspicion toward the result of the travel route acquired by the terminal unit 300 so that the user can use the reliable navigation even when the map information is updated in the server unit 400. In searching for a route with only the display data VM being updated, the convenience can be further improved by changing the differently displayed road, that is not included in the travel route, into the display form same as others when the user passes there or by performing the map matching processing.

Because of the processing for changing into the display form same as others by acquiring the matching data MM, the update-display data constituted by the element data being displayed in a different form from others does not need to be updated by creating the display data VM constituted by the element data being displayed in the form same as others when updating the matching data MM. Therefore, the update operation of the map information, in which the map information reflecting the most current information can be easily updated, is easily performed, and the communication cost can be reduced and a stable and excellent processing can be easily obtained.

If the revision date information is delivered together with the display data VM, there is no need to regularly repeat the processing for acquiring the matching data MM and the matching information can be acquired with a single processing. This realizes reduction of communication load and processing load, so that the communication becomes stable and smooth and the usability can be easily improved.

The version information in the terminal unit 300 is sent to the server unit 400 so that the server unit 400 recognizes the status of the map information in the terminal unit 300 to deliver the updated map information as needed. This reduces the communication load of the terminal unit 300, so that the terminal unit 300 can stably and quickly operated thereby improving the usability. Also, the terminal unit 300 can be simplified in its structure, so that the downsizing, improvement of the manufacturability and cost reduction can be easily realized. Especially, this is effective for the terminal unit 300 installed in a vehicle and the one used as a portable unit.

Further, the update processing can be facilitated by providing the version information to each of the display mesh information VMx of the display data VM and each of the matching mesh information MMx of the matching data MM to update with each of the display mesh information VMx and the matching mesh information MMx. Instead of providing to each mesh, the version information may be provided only to an element data of a road to be newly updated so that the terminal unit 300 updates it by sending/receiving only the new element data. This reduces the communication load and improves the efficiency of creation of the map information.

### [Modification of Embodiment]

The present invention is not limited to the above specific embodiment, but includes modifications and improvements as long as the objects of the present invention can be attained.

The movable body is a vehicle in the above description. The present invention, however, can be applied to any movable body such as an airplane or a ship. Or, the user oneself may be the movable body since the current position of the user carrying the terminal unit 300 is recognized as the current position of the terminal unit 300. Additionally, a mobile phone or a PHS (Personal Handyphone System) may be used as the terminal unit 300 that can be carried by the user, while the base station of the mobile phone or the PHS may be used as the server unit 400. With this arrangement, the mobile phone or the PHS is adapted to acquire information from the base station.

The acquisition of information in the navigation system 100 adapted to provide guidance according to the traveling state of the vehicle is described above, the present invention, however, is not limited to the navigation system 100, but may be so arranged that the map information is acquired from a personal computer.

Further, for example, the server unit 400 may only deliver the map information so that each terminal unit 300 searches for a route. With this arrangement, the processing carried out by the coordinates matching section can be performed at each terminal unit 300. Although the server unit 400 compares the version information, for example, the terminal unit 300 may compare the version information of the map information stored in the server unit 400 with the version information stored in the memory 360 so that the server unit 400 reads and sends the updated map information so as to be acquired by the terminal unit 300.

Although the map information is updated by the terminal unit 300 when the power is turned on or when the route is searched, the map information may be acquired by manual input operation of the user or may be acquired in other processing.

The retrieval of the retrieval information described in the embodiment may be omitted.

The current position recognizer 371 recognizes the current position information based on the data output from the various sensors and the GPS data output from the GPS receiver in the above described embodiment, other arrangement, however, may alternatively be used to recognize the current position of the movable body. As described above, the current position recognizer may recognize the assumed coordinates position input at the terminal input section 330 as the current position.

Although the structure for sending the plurality of travel routes which are selected based on the current position information, the destination information and the configuration information is described, it is not restricted to the structure. The travel routes may be specified, i.e. the routes are searched simply based on the current position information and the destination information; all acquired travel routes may be sent to the terminal unit 300; and the terminal unit 300 may select the travel route by the configuration at the terminal input section 330. This is applicable to the map information update in which the route search is not performed. Note that since the plurality of or one selected travel route is sent to the terminal unit 300, the communication load for sending/receiving the travel route and a complicated operation of selecting one travel route from the plurality of travel routes may be reduced, thereby emphasizing its convenience.

The route processor 452 and the coordinates matching section are provided as programs of the CPU 450, however, may alternatively be provided as hardware such as a circuit board or an element such as a single IC (Integrated Circuit). With the readings from a program or a recording medium, advantages such as the easy handling and promotion of the utilization can be attained.

The terminal unit 300 is provided with a transceiver 310 in the above description. However, the transceiver 310 may be separated from the terminal unit 300 and a mobile phone or a PHS that is connected to the terminal unit 300 may be used as the transceiver 310. In this case, the transceiver 310 is connected to the terminal unit 300 to appropriately send/receive information.

The arrangement and the operating procedures for implementing the above embodiment may be appropriately modified as long as the scope of the present invention can be attained.

## Claims

1. A map information processing device for delivering a map information over a network,
wherein the map information has: a display data including an element data for an element constituting a map of a predetermined area; and a matching data corresponding to the display data, including a plurality of point information that have coordinates information and unique point information and represent predetermined points, and a segment information that has a unique segment information and connects a pair of point information, the matching data representing a road by the point information and the segment information,
the map information processing device comprising:
a storage storing the map information and capable of storing an update-display data having an element data for a road other than the road represented by the matching data; and
a delivery section capable of delivering the map information and the update-display data and capable of delivering a signal indicating that there is no corresponding matching data when delivering the update-display data.

2. A map information processing device for delivering a map information over a network,
wherein the map information has: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a display version information associated with the display data on revision status of the display data,
the map information processing device comprising:
a storage for storing the map information;
a version information recognizer for reading and recognizing the display version information stored in the storage; and
a delivery section for delivering the display data corresponding to the recognized display version information as an update-display data when it is determined that the display version information recognized by the version information recognizer is different from the display version information recognized previously.

3. The map information processing device according to claim 2,
wherein the storage stores a matching version information associated with the matching data on revision status of the matching data,
wherein the version information recognizer reads and recognizes the matching version information stored in the storage, and
wherein the delivery section delivers the matching data corresponding to the recognized matching version information from the storage when it is determined that the matching version information recognized by the version information recognizer is different from the matching version information recognized previously.

4. The map information processing device according to claim 3, wherein the version information recognizer reads and recognizes the matching version information after the delivery section delivers the display data.

5. The map information processing device according to any one of claims 1 to 3,
wherein the storage stores a revision date information on a scheduled revision date of the matching data, and
wherein the delivery section sends the revision date information when delivering the display data.

6. A map information processing device for acquiring a map information over a network,
wherein the map information is stored in a storage and is provided with: a display data including an element data for an element constituting a map of a predetermined area; and a matching data corresponding to the display data, including a plurality of point information that have coordinates information and unique point information and represent predetermined points, and a segment information that has a unique segment information and connects a pair of point information, the matching data representing a road by the point information and the segment information,
the map information processing device comprising:
a map information acquiring section for acquiring the display data and the matching data from the storage; and
a determining section for determining whether the display data acquired by the map information acquiring section is an update-display data having an element data for a road other than the road represented by the matching data and generates a signal indicating that there is no corresponding matching data when determining that the display data is the update-display data.

7. A map information processing device for acquiring a map information over a network,
wherein the map information is stored in a storage and is provided with: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a display version information associated with the display data on revision status of the display data,
the map information processing device comprising:
a version information recognizer for reading and recognizing the display version information stored in the storage over the network; and
a map information acquiring section for reading the display data corresponding to the recognized display version information as an update-display data from the storage over the network when it is determined that the display version information recognized by the version information recognizer is different from the display version information recognized previously.

8. The map information processing device according to claim 7,
wherein the storage stores a matching version information associated with the matching data on revision status of the matching data,
wherein the version information recognizer reads and recognizes the matching version information stored in the storage, and
wherein the map information acquiring section acquires the matching data corresponding to the recognized matching version information from the storage when it is determined that the matching version information recognized by the version information recognizer is different from the matching version information recognized previously.

9. The map information processing device according to claim 8, wherein the version information recognizer reads and recognizes the matching version information after the map information acquiring section acquires the display data.

10. The map information processing device according to any one of claims 7 to 9,
wherein the storage stores a revision date information on a scheduled revision date of the matching data, and
wherein the map information acquiring section acquires the revision date information when acquiring the display data.

11. The map information processing device according to claim 10, further comprising a time piece for clocking a current date,
wherein the map information acquiring section acquires a matching data representing a road corresponding to an element data in the update-display data from the storage when determining that the current date clocked by the time piece is the scheduled revision date in the revision date information.

12. The map information processing device according to claim 10 or 11, further comprising:
a time piece for clocking a current date; and
a display controller for changing a display form of an area corresponding to a newly added element data by having a revision of the display data into a different display form in response to a difference between the current date clocked by the time piece and the scheduled revision date in the revision date information.

13. The map information processing device according to any one of claims 1 to 12, wherein the update-display data has data structure in which an element data corresponding to a newly added area in a revision or an element data corresponding to a newly deleting area is displayed in a form different from a display form of an element data corresponding to an area in the previous display data.

14. The map information processing device according to any one of claims 7 to 13,
wherein the version information recognizer compares the display version information of the display data and the matching version information of the matching data corresponding thereto to determine whether the version information are identical,
the map information processing device further comprising a display controller for displaying a revised area in the acquired display data on a display in a form different from a form in which the previous display data is displayed on the display.

15. The map processing device according to claim 14, wherein when the map information acquiring section acquires the matching data, the display controller changes the display form of the display data into a same display form of the previous display data according to the matching data.

16. A map information processing system comprising:
the map information processing device according to any one of claims 1 to 5 and claim 13; and
a terminal unit being connected to the map information processing device over the network in a manner capable of acquiring the map information.

17. A map information processing system comprising:
the map information processing device according to any one of claims 2 to 5 and claim 13; and
a terminal unit being connected to the map information processing device over the network in a manner capable of acquiring the map information, the terminal unit including a terminal storage storing the acquired map information,
wherein, in the map information processing device, the version information recognizer recognizes a display version information of the map information stored in the storage of the terminal unit, the delivery section delivers the display data corresponding to the display version information stored in the storage to the terminal unit when the recognized display version information is different from the recognized display version information read from the storage.

18. A map information processing system comprising:
the map information processing device according to any one of claims 6 to 15; and
a server unit to which the map information processing device is connected over the network in a manner capable of acquiring the map information, the server unit including a storage for storing the map information.

19. A map information processing system according to claim 18, wherein the map information processing device acquires an update-display data when electric power is supplied.

20. The map information processing system according to claims 18 or 19,
wherein the server unit including a travel route search section for searching for a travel route using the map information based on a current position information on a current position and a destination information on a destination, and
wherein the map information processing device includes a current position information acquiring section for acquiring a current position information on a current position and a destination information acquiring section for acquiring a destination information on a destination and acquires the update-display data when the travel route search section searches for the travel route.

21. A map information processing method for delivering a map information by a computing section over a network,
wherein the map information has: a display data including an element data for an element constituting a map of a predetermined area; and a matching data corresponding to the display data, including a plurality of point information that have coordinates information and unique point information and represent predetermined points, and segment information that have unique segment information and connect a pair of point information, the matching data representing a road by the point information and the segment information, and
wherein the computing section delivers a signal indicating that there is no corresponding matching data when delivering an update-display information having an element data for a road other than the road represented by the matching data.

22. A map information processing method for delivering a map information by a computing section over a network,
wherein the map information is stored in a storage and is provided with: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a version information associated with the display data on revision status of the display data, and
wherein the computing section reads and recognizes the version information and delivers the display data corresponding to the version information as an updated data from the storage when the recognized version information is different from the previous version information.

23. A map information processing method for delivering a map information by a computing section over a network,
wherein the map information is stored in a storage and is provided with: a display data including an element data for an element constituting a map of a predetermined area; and a matching data corresponding to the display data, including a plurality of point information that have coordinates information and unique point information and represent predetermined points, and a segment information that has a unique segment information and connects a pair of point information, the matching data representing a road by the point information and the segment information, and
wherein the computing section determines whether the acquired display data is an update-display data having an element data for a road other than the road represented by the matching data and generates a signal indicating that there is no corresponding matching data when determining that the display data is the update-display data.

24. A map information processing method for delivering a map information by a computing section over a network,
wherein the map information is stored in a storage and is provided with: a display data including an element data for an element constituting a map of a predetermined area; a matching data corresponding to the display data, including a plurality of point information that have coordinates information and unique point information and represent predetermined points, and a segment information that has a unique segment information and connects a pair of point information, the matching data representing a road by the point information and the segment information; and a display version information associated with the display data on revision status of the display data, and
wherein the computing section acquires the display data corresponding to the version information as an updated data from the storage when the display version information previously acquired is different from the display version information stored in the storage.

25. A map information processing program executing the map information processing method according to any one of claims 21 to 24 by a computing section.

26. A recording medium storing the map information processing program according to claim 25 in a manner readable by a computing section.
